# EUROPEAN PATENT APPLICATION

(11) **EP 4 525 158 A1**
(43) Date of publication of application: **19.03.2025**
(21) Application number: 23827456.7
(22) Date of filing: 16.06.2023
(51) Int. Cl.: H01M 50/242, H01M 50/211, H01M 10/655, H01M 10/651, H01M 10/6554, H01M 10/647

(54) **BATTERY MODULE**

(30) Priority: 24.06.2022 KR 20220077843
(71) Applicant: LG Energy Solution, Ltd., Seoul 07335 (KR)
(72) Inventor: JUNG, Ki Taek, Daejeon 34122 (KR); PARK, Jun Kyu, Daejeon 34122 (KR)
(74) Representative: Plasseraud IP
(86) International application number: PCT/KR2023/008413
(87) International publication number: WO 2023/249339

(57) **Abstract**

A battery module according to an embodiment of the present invention include a case in which an accommodation space is defined, a plurality of battery cells disposed in the accommodation space, a fixing part provided on an inner bottom surface of the case, and a connection part comprising a cell adhesion portion disposed between the plurality of battery cells and a fixed adhesion portion connected to the cell adhesion portion and adhered to the fixing part.

## Description

### TECHNICAL FIELD

The present application claims the benefit of the priority of Korean Patent Application No. 10-2022-0077843, filed on June 24, 2022, which is hereby incorporated by reference in its entirety.

The present invention relates to a battery module.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

In general, a pouch-type battery case is manufactured by performing press processing on a pouch film having flexibility to form a cup part. Then, when the cup part is formed, the secondary battery is manufactured by accommodating the electrode assembly inside the cup part and sealing a corner part, which is a peripheral portion of the cup part.

Furthermore, a battery module is manufactured by coupling a plurality of secondary batteries and putting the secondary batteries, which are coupled to each other, in a case. Such a secondary battery, that is, a battery cell is accommodated inside the case and is connected and fixed to an inner surface of the case through an adhesive having a resin component.

In a state in which the battery cell is coupled to the inner surface of the case through an adhesive, when a swelling phenomenon of the battery cell occurs, large tensile force acts on the case of the battery cell. Here, the swelling refers to a phenomenon in which a lithium ion electrolyte in the pouch is vaporized, and thus, the battery becomes convex due to a pressure. Particularly, in the case of the pouch-type battery cell, as described above, the pouch is constituted by a cup part forming an inner accommodation space and a corner part that is a sealing section around the cup part. Since a reduction in a thickness of a raw material of the corner part is greater than that of the cup part during a press molding process of the pouch, more tensile force is applied to the corner part when the tension is generated on an outer surface of the pouch.

As a result, when the battery cell connected to the adhesive is pushed by the swelling, large tensile force is applied to the corner part, causing gas explosion or leakage of the battery cell. In order to prevent this phenomenon, there is a need for a battery module having an improved connection structure between the adhesive and the battery cell.

### DISCLOSURE OF THE INVENTION

### TECHNICAL PROBLEM

An object of the present invention for solving the above problem is to provide a battery module that improves a structure of a connection part connecting the fixing part to the battery cell to prevent the battery cell from being damaged.

### TECHNICAL SOLUTION

A battery module according to an embodiment of the present invention include a case in which an accommodation space is defined, a plurality of battery cells disposed in the accommodation space, a fixing part provided on an inner bottom surface of the case, and a connection part comprising a cell adhesion portion disposed between the plurality of battery cells and a fixed adhesion portion connected to the cell adhesion portion and adhered to the fixing part.

The plurality of battery cells may be stacked in a direction parallel to a bottom surface of the case, and the cell adhesion portion may be perpendicular to the bottom surface of the case.

A longitudinal direction of the fixed adhesion portion may be perpendicular to that of the cell adhesion portion.

Each of the plurality of battery cells and the fixing part may be spaced a predetermined distance from each other.

The fixed adhesion portion may be disposed between the battery cell and the fixing part.

A top surface of the fixed adhesion portion may be spaced apart from a bottom surface of the battery cell.

The connection part may further include an inclined portion provided to be inclined between the cell adhesion portion and the fixed adhesion portion..

The battery module may further include an adhesive pad configured to bond the plurality of battery cells to each other in a stacking direction of the plurality of battery cells.

The adhesive pad and the cell adhesion portion may be alternately stacked in the stacking direction of the plurality of battery cells.

The connection part may be provided in plurality.

Thermal conductivity of the connection part may be greater than that of each of the battery cells.

Thermal conductivity of the fixing part may be greater than that of each of the battery cells.

### ADVANTAGEOUS EFFECTS

According to the preferred embodiment of the present invention, the structure of the connection part connecting the fixing part to the battery cell may be improved to prevent the battery cell from being damaged and exploded, thereby improving the stability and lifespan of the battery module.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a cross-sectional view of a battery module according to a comparative example.
FIG. 2 is a cross-sectional view illustrating a state in which swelling occurs in a battery cell according to the comparative example.
FIG. 3 is a cross-sectional view of a battery module according to an embodiment.
FIG. 4 is a cross-sectional view illustrating a battery cell, a connection part, and a fixing part of a battery module according to another embodiment.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

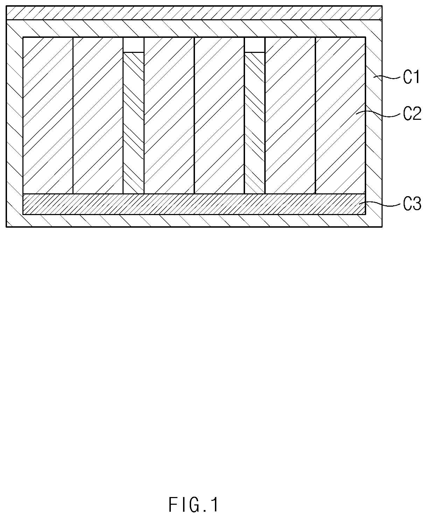

FIG. 1 is a cross-sectional view of a battery module according to a comparative example.

Referring to FIG. 1, a battery module according to a comparison example may include a case C1 and battery cells C2 provided inside the case C1. For example, the battery module according to the comparison example may include an adhesive layer C3 on an inner bottom surface of the case C1, and the plurality of battery cells C2 may be adhered and fixed through the adhesive layer C3.

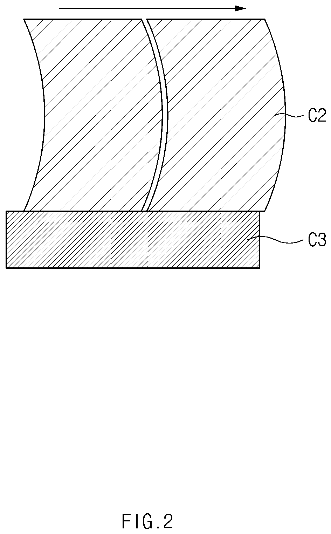

FIG. 2 is a cross-sectional view illustrating a state in which swelling occurs in the battery cell C2 according to the comparative example.

Referring to FIG. 2, in the structure of the comparative example, when a swelling phenomenon of the battery cell C2 occurs due to internal vaporization and damage of the battery cell C2, referring to FIG. 2, in a state in which bottom surfaces of the plurality of battery cells are fixed to the adhesive layer C3, the battery cells C2 may receive external force to one side in a direction of an arrow in FIG. 2.

When each of the battery cells C2 is a pouch-type battery constituted by a cup part and a corner part, since a reduction in thickness of the corner part is greater than that of the cup part during the press molding process of the pouch, when tension occurs at a connection part between the pouch and the adhesive layer C3, large tensile force may act on the corner part connected to the adhesive layer C3.

Therefore, according to the structure according to the comparative example, when the swelling occurs, the possibility of damage to the corner part of the battery cell C2, which is vulnerable to the tension, may increase. As a result, an accident in which the battery module is exploded may occur due to discharge of an internal gas and flame due to the damage or destruction of the battery cell C2.

In order to compensate for this problem, the battery module 1 according to an embodiment of the present invention may include the following structures and functions.

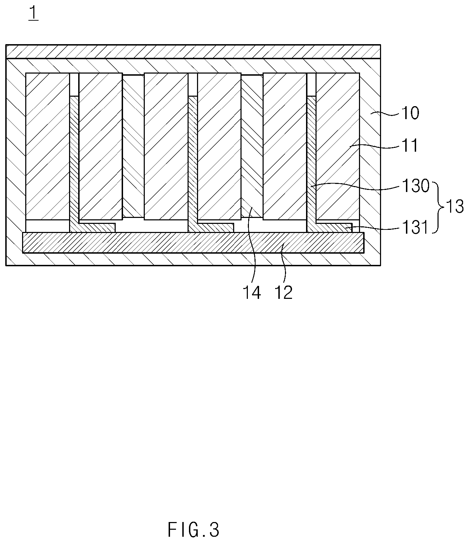

FIG. 3 is a cross-sectional view of a battery module 1 according to an embodiment.

Referring to FIG. 3, the battery module 1 may accumulate electric energy by accommodating a plurality of battery cells 11 inside a case 10 and may output the accumulated electric energy to the outside by being connected to an external terminal. For example, the battery module 1 may include a case 10 defining an accommodation space therein, and the plurality of battery cells 11 may be stacked on each other and disposed and fixed in the accommodation space. In this case, the battery cell 11 may include a pouch, which are constituted by a cup part and a corner part, and an electrode assembly accommodated in the pouch. The cup part may refer to a portion formed to be recessed in a central portion of the pouch through a press-forming process of the pouch, and the corner part may refer to a side sealing part formed along a circumference of the cup part.

The battery module 1 may prevent a plurality of battery cells 11 from being damaged due to swelling through a connection structure in which the plurality of battery cells 11 are connected to an inner surface of a case 10. In other words, the battery module 1 may improve the connection structure in order to reduce damage of the corner part of the pouch of the battery cells 11. In addition, the battery module 1 may more effectively release heat generated in the plurality of battery cells 11 to the outside through the connection structure.

Specifically, the battery module 1 may further include a fixing part 12 and a connection part 13.

The fixing part 12 may fix the plurality of battery cells 11 to the inside of the case 10. For example, the fixing part 12 may be provided on an inner bottom surface of the case 10 and be connected to the plurality of battery cells 11. Specifically, the bottom surface of the fixing part 12 may be connected to the inner bottom surface of the case 10, and the top surface of the fixing part 12 may be connected to the plurality of battery cells 11. More specifically, a top surface of the fixing part 12 may be connected to the plurality of battery cells 11 through the connection part 13 to be described later.

The sealing part 12 may include an adhesive material. For example, the fixing part 12 may include a resin material and may be applied to an inner top surface of the case 10 and then be solidified in a state of being adhered and connected to the connection part 13 to be described later after being applied to the inner bottom surface of the case 10 to connect the inner bottom surface of the case 10 to the plurality of battery cells 11.

The connection part 13 is connected to the plurality of battery cells 11 and the fixing part 12 to connect the plurality of battery cells 11 to the fixing part 12. For example, the connection part 13 may be provided between the plurality of battery cells 11 to protrude from the plurality of battery cells 11 to one side in the state of being coupled to the plurality of battery cells 11 so as to be connected to the fixing part 12, thereby connecting the plurality of battery cells 11 to the fixing part 12. In this case, the plurality of battery cells 11 are connected to the fixing part 12 only through the connection part 13, and the plurality of battery cells 11 may not be in contact with the fixing part 12. The plurality of battery cells 11 and the fixing part 12 may be disposed to be spaced a predetermined distance from each other.

The connection part 13 may include a cell adhesion portion 130 and a fixed adhesion portion 131.

The cell adhesion portion 130 may be disposed between the plurality of battery cells 11. For example, the cell adhesion portion 130 may be disposed between the plurality of battery cells 11 according to a direction in which the plurality of battery cells 11 are stacked. In this case, the plurality of battery cells 11 may be stacked in a direction parallel to the bottom surface of the case 10. That is, since the cell adhesion portion 130 is disposed in a space between the plurality of battery cells 11, which are stacked, the cell adhesion portion 130 may include a structure in which the battery cell 11 are coupled and connected to both sides thereof.

Specifically, a longitudinal direction of the cell adhesion portion 130 may be perpendicular to a bottom surface of the case 10. In other words, when viewed in a side view, the cell adhesion portion 130 may include a structure extending toward the top and bottom surfaces of the case 10. The cell adhesion portion 130 may protrude from the plurality of battery cells 11 to a bottom surface of the case 10 in a state of being disposed and connected between the plurality of battery cells 11 and then may be connected to the fixed adhesion portion 131.

The fixed adhesion portion 131 may be connected to the cell adhesion portion 130 and adhered to the fixing part 12. For example, the top surface of the fixed adhesion portion 131 may be connected to a lower portion of the cell adhesion portion 130, and the bottom surface of the fixed adhesion portion 131 may be adhered to a top surface of the fixing part 12. That is, the fixed adhesion portion 131 may be disposed between the plurality of battery cells 11 and the fixing part 12 to connect the cell adhesion portion 130 to the fixing part 12.

In this case, the fixed adhesion portion 131 may not be in contact with the plurality of battery cells 11. Since the fixed adhesion portion 131 does not in contact with the plurality of battery cells 11, even if the plurality of battery cells 11 are pushed due to the swelling, the structure in which the fixed adhesion portion 131 and the plurality of battery cells 11 are disposed to be spaced apart from each other may allow the tensile force to act on the battery cell 11 by the fixed adhesion portion 131 or prevent the battery cell 11 from being damaged.

A longitudinal direction of the fixed adhesion portion 131 may be perpendicular to the longitudinal direction of the cell adhesion portion 130. In other words, the fixed adhesion portion 131 may be vertically connected to the cell adhesion portion 130 and may be disposed to be arranged parallel to the bottom surface of the case 10. For example, due to the structure of the cell adhesion portion 130 and the fixed adhesion portion 131, the connection part 13 may include an 'L' shape. Specifically, when viewed in the side view, an adhesion length of the fixed adhesion portion 131 with the fixing part 12 may be greater than a width of the cell adhesion portion 130.

According to the structure of the connection part 13, when viewed in the side view, in a state in which the connection part 13 is coupled between the plurality of stacked battery cells 11, the bottom surface of the connection part 13, i.e., the bottom surface of the fixed adhesion portion 131 may be in contact with and connected to the fixing part 12 on a wider area. In other words, the connection part 13 may be coupled to the battery cell 11 on the wider area through the cell adhesion portion 130 and connected to the fixing part on the wider area through the fixing adhesion portion 131, and thus, the coupling force and fixing force between the plurality of battery cells 11 may increase.

Supplementally, since the cell adhesion portion 130 is not limited to a specific area of the pouch of the battery cell 11, but is coupled to the battery cell 11 over the wide area including the cup part and the corner part of the pouch of the battery cell 11, the tensile force due to the swelling may be dispersed to the wide area of the pouch of the battery cell 11. Similarly, even if the battery cell 11 is pushed by the swelling, since the fixed adhesion portion 131 is coupled to the fixing part 12 on the wide area, the tensile force generated between the fixed adhesion portion 131 and the fixing part 12 may be dispersed to the wide area.

Thus, the structure of the connecting portion 13 as described above may prevent the pouch from being damaged due to concentration of the tensile force generated in the relatively weak corner part due to the swelling phenomenon. As a result, secondary problem situations such as the explosion of the battery module 1 may be prevented from occurring.

Additionally, when high-temperature heat is generated in the battery cell 11 by the swelling, in order to more effectively release the heat of the battery cell 11, thermal conductivity of the fixing part 12 and the connection part 13 may be higher than that of the battery cell 11. Specifically, the fixing part 12 may include an adhesive made of a resin material having thermal conductivity greater than that of the battery cell 11. In addition, the connection part 13 may include a plate shape made of a metal material having thermal conductivity greater than that of the battery cell 11.

The connection part 13 may more effectively transfer the heat generated in the battery cell 11 to the outside through the structural features of the cell adhesion portion 130 and the fixed adhesion portion 131 described above. In other words, in the case of the comparative example in which the connection part 13 does not exist, the battery cell C2 may be directly connected to the adhesive layer C3, and the high-temperature heat generated due to the internal vaporization may be transferred to the adhesive layer C3. In this process, heat at one side of the battery cell C2 directly connected to the adhesive layer C3 may be immediately released through the adhesive layer C3, but heat at the other side of the battery cell C2, which is not connected to the adhesive layer C3, may not be released effectively. Unlike the comparative embodiment, since the connection part 13 according to the present invention is disposed between the plurality of battery cells 11, is connected to the plurality of battery cells 11 on the wider area, and is relatively far apart from the fixing part 12, the high-temperature heat generated in the battery cell 11 may be more effectively released.

Additionally, in order to improve the damage prevention effect and the heat dissipation effect of the connection part 13 and the fixing part 13, the connection part 13 may be provided in plurality, which are disposed between the plurality of battery cells 11, respectively. That is, while the fixing part 12 is integrally formed on the inner bottom surface of the case 10, the connection part 13 may be provided in plurality to prevent each of the battery cells 11 from being damaged and to effectively transfer the heat generated in each battery cell 11 to the fixing part 12.

An adhesive pad 14 may adhere the plurality of battery cells 11 according to the stacking direction of the plurality of battery cells 11. For example, the adhesive pad 14 may be disposed between the stacked battery cells 11 to allow the plurality of battery cells 11 to be in contact with and coupled to each other. That is, the adhesive pad 14 may have a longitudinal direction perpendicular to the bottom surface of the case 10, like the cell adhesion portion 130. Specifically, in a state in which the battery cell 11 is provided between the cell adhesion portion 130 and the adhesive pad 14, the adhesive pad 14 and the cell adhesion portion 130 may be alternately stacked with each other in the stacking direction of the plurality of battery cells 11. In other words, the battery cell 11, the cell adhesion portion 130, the battery cell 11, and the adhesive pad may be repeatedly stacked in the order.

Due to the function of the adhesive pad 14 as described above, coupling force between the plurality of battery cells 11 may increase, and thus, the plurality of battery cells 11 may be more fixed to the inside of the case 10, and the damage of the battery cell 11 due to the swelling may be reduced.

Hereinafter, a battery module 2 according to another embodiment in which the structure of the connection part is partially modified will be described. Details identical to the configuration and function of the battery module described above will be omitted below.

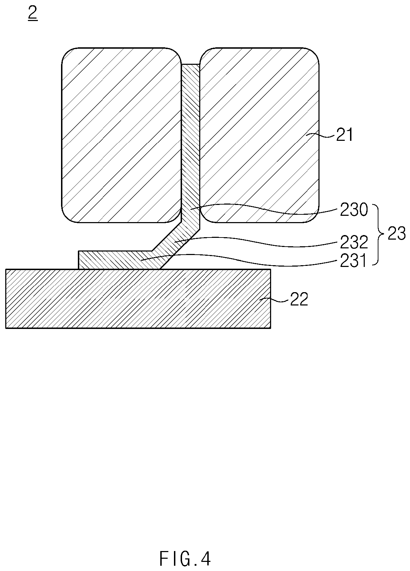

FIG. 4 is a cross-sectional view illustrating a battery cell 21, a connection part 23, and a fixing part 22 of a battery module 2 according to another embodiment.

Referring to FIG. 4, the battery module 2 according to another embodiment may include a plurality of battery cells 21, a connection part 23, and a fixing part 22, which have the same configuration of the battery module 1 described above. In addition, the connection part 23 according to another embodiment may include a cell adhesion portion 230 and a fixed adhesion portion 231.

Additionally, the connection part 23 according to another embodiment may further include an inclined portion 232.

The inclined portion 232 may be provided between the cell adhesion portion 230 and the fixed adhesion portion 231 so as to be inclined. For example, the inclined portion 232 may include a shape inclined with respect to a longitudinal direction of the cell adhesion portion 230 and the fixed adhesion portion 231. In other words, the cell adhesion portion 230 and the fixed adhesion portion 231 may be perpendicular to each other, and the inclined portion 232 may include a shape inclined at an angle of 45 degrees with respect to the cell adhesion portion 230 and the fixed adhesion portion 231.

According to the structure of the inclined portion 232, even if the battery cell 21 is pushed by swelling, and tensile force is generated between the fixed adhesion portion 231 and a fixing part, the inclined portion 232 may buffer external force transmitted from the battery cell 21 to the fixing part to perform a function of reducing the tensile force between the fixed adhesion portion 231 and the fixing part 22.

As a result, since the connection part 23 according to another embodiment further includes the inclined portion 232, damage of the battery cell 21 due to the swelling may be more minimized to prevent a secondary problem such as an explosion phenomenon that occurs due to the damage of the battery cell 21, from occurring.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

- 1:: Battery module
- 10:: Case
- 11:: Battery cell
- 12:: Fixing part
- 13:: Connection part
- 14:: Adhesive pad
- 130:: Cell adhesion portion
- 131:: Fixed adhesion portion
- 232:: Inclined portion

## Claims

1. A battery module comprising:
a case in which an accommodation space is defined;
a plurality of battery cells disposed in the accommodation space;
a fixing part provided on an inner bottom surface of the case; and
a connection part comprising a cell adhesion portion disposed between the plurality of battery cells and a fixed adhesion portion connected to the cell adhesion portion and adhered to the fixing part.

2. The battery module of claim 1, wherein the plurality of battery cells are stacked in a direction parallel to a bottom surface of the case, and
the cell adhesion portion is perpendicular to the bottom surface of the case.

3. The battery module of claim 2, wherein a longitudinal direction of the fixed adhesion portion is perpendicular to that of the cell adhesion portion.

4. The battery module of claim 1, wherein each of the plurality of battery cells and the fixing part are spaced a predetermined distance from each other.

5. The battery module of claim 4, wherein the fixed adhesion portion is disposed between the battery cell and the fixing part.

6. The battery module of claim 5, wherein a top surface of the fixed adhesion portion is spaced apart from a bottom surface of the battery cell.

7. The battery module of claim 6, wherein the connection part further comprises an inclined portion provided to be inclined between the cell adhesion portion and the fixed adhesion portion.

8. The battery module of claim 1, further comprising an adhesive pad configured to bond the plurality of battery cells to each other in a stacking direction of the plurality of battery cells.

9. The battery module of claim 8, wherein the adhesive pad and the cell adhesion portion are alternately stacked in the stacking direction of the plurality of battery cells.

10. The battery module of claim 1, wherein the connection part is provided in plurality.

11. The battery module of claim 1, wherein thermal conductivity of the connection part is greater than that of each of the battery cells.

12. The battery module of claim 1, wherein thermal conductivity of the fixing part is greater than that of each of the battery cells.
